# EUROPÄISCHE PATENTSCHRIFT

(11) **EP 4 079 152 B1**
(45) Veröffentlichungstag und Bekanntmachung des Hinweises auf die Patenterteilung: **30.04.2025**
(21) Anmeldenummer: 22161024.9
(22) Anmeldetag: 09.03.2022
(51) Int. Cl.: A01K 59/04

(54) **HONIGSCHLEUDER**
HONEY EXTRACTOR
EXTRACTEUR DE MIEL

(30) Priorität: 22.04.2021 DE 102021002119
(43) Veröffentlichungstag der Anmeldung: 26.10.2022
(73) Patentinhaber: Groschopp AG Drives & More, 41747 Viersen (DE)
(72) Erfinder: Pflug, Wolfgang, 45136 Essen (DE)
(74) Vertreter: Cohausz & Florack

(56) Entgegenhaltungen:
- CH-A- 408 525
- DE-C- 729 635
- FR-A- 988 728
- FR-E- 88 950

## Beschreibung

Die Erfindung betrifft eine Honigschleuder mit einem Behälter, in dem ein drehbarer Korb mit Aufnahmen für Honigwaben und einer Rotationsachse in Drehung versetzbar ist, wobei jede Aufnahme einen Aufnahmeraum aufweist, dessen Längsausrichtung zumindest während des Schleudervorgangs unter einem Winkel zwischen 30° und 150° zu einer von der Rotationsachse radialen, den Aufnahmeraum durchlaufenden Linie angeordnet ist, und wobei die Honigschleuder einen Antrieb für die Rotation des Korbes aufweist.

Honigschleudern werden von unterschiedlichsten Herstellern in verschiedenen Ausführungsformen vertrieben und sind bekannt. Der Behälter ist in der Regel ein zylindrischer Topf aus Edelstahl mit einem Außendurchmesser zwischen 400 und 1000 mm. Darin befinden sich wenigstens ein sogenannter Korb, der Aufnahmen für eine oder mehrere Waben aufweist.

Unter dem Begriff Wabe wird hier die Honigwabe mit ihren Wabenzellen in einem sogenannten Rähmchen verstanden, die der Beute (Bienenstockbehausung) entnommen wurde. Die Rähmchen sind in der Regel aus Holz mit Kantenlängen zwischen 150 und 450 mm und können in der Beute beispielsweise mit weiteren Rähmchen eingesetzt werden. Bienen bauen das Rähmchen mit Hilfe von Bienenwachs zu einer Wabe aus, die die bekannten sechseckigen Wabenzellen aufweisen.

Obwohl es auch manuelle Kurbelantriebe mit Freilauf gibt, bezieht sich diese Erfindung auf drehbar gelagerte Körbe, die vorzugsweise über einen Motor angetrieben werden. Ihre Rotationsachse ist in der Regel senkrecht. FR88950 E und FR988728 A offenbaren typische Honigwabenschleudern, mit einem Behälter, in dem ein drehbarer Korb mit Aufnahmen für Honigwaben und einer Rotationsachse und Motor.

Bei den Honigschleudern unterscheidet man im Wesentlichen
a) Tangentialschleudern
b) Radialschleudern und
c) Selbstwendeschleudern.

Bei den Tangentialschleudern werden die Waben tangential innerhalb des Korbes in eine Halterung eingebracht. Bei der Rotation des Korbes wird der Honig zunächst nur auf der der Behälterwand zugewandten Seite herausgeschleudert, bis die Wabe von Hand gewendet wird.

Bei der Radialschleuder befinden sich die Waben sternförmig in den Aufnahmen des Korbes und es werden durch die Fliehkräfte beide Seiten der Wabe, also der dort befindlichen Wabenzellen entleert. Dieses Verfahren ist aber anfällig für Wabenbrüche.

Bei der dritten Schleuder schwenkt jede Aufnahme des Korbes von einer radial ausgerichteten Ausgangsstellung je nach Drehrichtung des Korbes um eine Achse bis in eine zumindest nahezu tangentiale Stellung, so dass beide Seiten entleert werden können, wenn man die Drehrichtung des Korbes wechselt.

Zur Begriffserläuterung in dieser Anmeldung wird unter einer Aufnahme ein in der Regel käfigartiges Fach mit einer in der Regel nach oben hin offenen Einsetzöffnung für eine Wabe verstanden, und die Gesamtheit der befinden sich an einem rotierbaren Korb. Ferner sei unter einer Rotationsachse eine Gerade verstanden, um die sich ein Korb oder eine Aufnahme drehen, während unter einer Drehachse die räumlich ausgebildete Achse oder Welle zu verstehen ist.

Beim Ausschleudern von Honig kann es zu einem Bruch der Waben aufgrund von mechanischer Überlastung kommen. Insbesondere auf volle oder teilentleerte Waben wirken höhere Fliehkräfte. Daher wird die Honigschleuder anfangs in der Regel vorsichtig mit einer geringeren Drehzahl gefahren, die bei den modernsten Honigschleudern an einer Steuereinheit eingestellt werden kann. Wenn die Wabe nahezu entleert ist, wagt der Imker dann eine höhere Drehgeschwindigkeit. Bei den Selbstwendeschleudern ist die Wahl der Drehgeschwindigkeit noch anspruchsvoller.

Hinzu kommt, dass die Viskosität des Honigs und das Gewicht der Waben stark variieren kann, so dass Erfahrungswerte nicht unbedingt übertragbar sind.

Die Schwenkbewegungen der Aufnahmen, die dazu dienen, dass beide Seiten der Wabe der Behälterwand zugewendet werden können bzw. die Wabenzellen auf beiden Seiten der Wabe effektiv durch die Zentrifugalkraft aus der Drehung des Korbes geleert werden können, erfordert für die gleich von Aufnahmen einen größeren Raum als dies bei den Tangentialschleudern der Fall ist.

**In** der Regel sind die Behälter zylinderförmig mit geringer Wandstärke aus Edelstahl oder Plexiglas. Wenn für eine Tangentialschleuder mit vier ein Behälterinnendurchmesser von 430 mm notwendig ist, so ist bei einer Selbstwendeschleuder mit vier Aufnahmen bereits ein Innendurchmesser von über 600 mm, oft 690 mm Bedingung.

Bei dem Vorteil, die Waben wie in Tangentialschleudern nicht manuell umdrehen zu müssen, muss man bei Selbstwendeschleudern also den größeren Platzbedarf und Materialaufwand in Kauf nehmen.

Es ist deshalb Aufgabe der Erfindung, die Größe von Honigschleudern zu verringern bzw. im vorhandenen Behälterraum mehr Aufnahmen unterzubringen als bisher.

In Bezug auf die Honigschleuder wird die Aufgabe durch die Merkmale des Anspruchs 1 und insbesondere dadurch gelöst, sich die Aufnahmeräume benachbarter Aufnahmen zumindest während des Schleudervorgangs im Umfangsrichtung des Korbes teilweise überlappen.

Im Stand der Technik sind die Aufnahmen in einer Tangentialschleuder auf den Seiten eines Vielecks angeordnet. Bei einer Selbstwendeschleuder kommt es bei der Schwingbewegung der Aufnahmen nicht zu einem Kontakt mit der Nachbaraufnahme. Bei üblichen Anordnungen haben zur Folge, dass jede Wabe mit ihrer gesamten Fläche einer Innenwand des Behälters zugewandt ist. In diesem Fall liegt bei beiden Schleudertypen die Längsausrichtung eines Aufnahmeraums während des Schleudervorgangs unter einem Winkel von etwa 90° zu einer von der Rotationsachse des Korbes radialen, den Aufnahmeraum durchlaufenden Linie.

Die Erfinder haben nun erkannt, dass das nicht unbedingt notwendig ist, weil im Bereich der Rähmchen der Waben kein Honig aus den Waben ausgeschleudert werden kann. Tatsächlich ist es möglich, dass sich die Aufnahmeräume ein Stück überlappen können, ohne dass ausgeschleuderter Honig nicht wie gewünscht ausgeschleudert werden kann.

Dabei kann die Längsausrichtung eines Aufnahmeraums bei Selbstwendeschleudern während des Schleudervorgangs unter einem Winkel zwischen 30° und 150° zu einer von der Rotationsachse des Korbes radialen, den Aufnahmeraum durchlaufenden Linie angeordnet sein, ohne dass während des Schleudervorgangs Probleme auftreten, also beispielsweise ein Teil des Honigs nicht gegen die Behälterinnenwand geschleudert werden kann.

Die Längsausrichtung der Aufnahmeräume ist durch die Mittelachse der längsten horizontalen Ausdehnung definiert. Die erfindungsgemäße Überlappung der Aufnahmeräume in Umfangsrichtung des Korbes bewirkt, dass in gleicher Behältergröße bis zu 50% mehr Aufnahmen hineinpassen.

Von Vorteil ist es, wenn die Längsausrichtung eines Aufnahmeraums zumindest während des Schleudervorgangs unter einem Winkel zwischen 60° und 120° zu einer von der Rotationsachse radialen, den Aufnahmeraum durchlaufenden Linie angeordnet ist.

In diesem Fall ist gewährleistet, dass die Aufnahme sehr dicht an der Behälterinnenwand des Behälters rotiert und eine Fläche zur Behälterinnenwand weist. Der Winkel liegt deutlich näher bei dem sich bislang als vorteilhaft erwiesenen 90°-Winkel, bei dem die Aufnahme an beiden Enden der Längsausrichtung etwa gleich weit von der Behälterinnenwand entfernt sind. Im Gegensatz zum Stand der Technik sind aber durch die leichte Anwinkelung zur radialen Linie mehr Aufnahmen im gleichen Behälter unterzubringen als vorher, weil dadurch auch eine Überlappung in Umfangsrichtung realisiert werden kann. Wenn die Erfindung zwar auch bei Tangentialschleudern realisierbar ist, so wird sie bevorzugt doch bei einer Honigschleuder eingesetzt, bei der die Aufnahmen bezogen auf jeweils eine Rotationsachse drehgelagert sind und ggf. in Abhängigkeit der Drehrichtung des Korbes in zwei Richtungen schwenkbar sind.

Diese Aufnahmen stehen im Stillstand des Korbes radial und werden über eine am Korb befestigte Drehachse in der Nähe der Behälterinnenwand drehbar gelagert. Mit steigender Drehzahl werden die Aufnahmen tangential ausgerichtet bis sie im Bereich der Überlappung aneinanderstoßen.

Erfindungsgemäß ist vorgesehen, dass ein Ableitblech in einem Überlappungsbereich von zwei Aufnahmen vorgesehen ist.

Ein solches Ableitblech fängt den ausgeschleuderten Honig der Wabe auf, die sich in der weiter innen im Behälter liegenden Aufnahme befindet, und leitet den Honig nach unten in Richtung einer Auslassöffnung ab. Es ist also dafür gesorgt, dass durch die Zentrifugalkraft ausgeschleuderter Honig einer weiter im Inneren des Behälters liegenden Aufnahme nicht auf die Rückseite einer weiter außen liegenden Aufnahme geschleudert wird. Das Ableitblech ist erfindungsgemäß an einer Aufnahme selbst befestigt. Auf diese Weise wird auch verhindert, dass der Honig einer weiter im Inneren des Behälters befindlichen Wabe ihren Honig erneut in die Rückseite der Wabe, die näher am Innenumfang des Behälters liegt, einträgt.

Im Stand der Technik sind die Rotationsachsen an einem Ende einer Aufnahme außerhalb des Aufnahmeraums durch eine senkrechte Drehachse am äußersten Rand des Korbes gebildet. Mit einer Rückstelleineinrichtung, die meist durch eine Feder oder ein Elastomer gebildet ist, steht die Aufnahme mit ihrem Aufnahmeraum im Stillstand der Honigschleuder radial im Behälter. D. h., alle Aufnahmen bilden im Stillstand der Honigschleuder eine sternförmige Anordnung. Mit der Drehung des Korbes schwenkt die Aufnahme um die am Außenumfang des Korbes angebrachte Drehachse in eine tangentiale Position, um den Honig der Honigwabenzellen einer Wabenseite mit Hilfe der Zentrifugalkraft an die Behälterwand zu schleudern. Bei einer Drehrichtungsumkehr wird entsprechend die andere Wabenseite
bedient.

Die Erfinder haben nun erkannt, dass der Schwenkradius der Aufnahmen sehr groß ist, wenn die Drehachse wie bislang am Ende einer Aufnahme außerhalb des Aufnahmeraums und dazu noch zwischen Aufnahme und Behälterinnenwand angeordnet ist. Es ist deshalb von besonderem Vorteil, wenn sich ein Drehlager für die Aufnahme unterhalb des Aufnahmeraums befindet.

Wegen der Verlegung der Rotationsachse durch den Aufnahmeraum, kann die Aufnahme dichter an die Behälterinnenwand heranreichen. Außerdem ist der Schwenkradius kleiner. Der Platzbedarf für die Schwenkbewegung der Aufnahmen wird dadurch deutlich geringer.

Um bei dem genannten Beispiel zu bleiben, so würde sich der Durchmesser des Behälters von 690 mm auf 660 mm verringern lassen, was zu einer erheblichen Materialeinsparung führt. Oder anders ausgedrückt, könnten in Behälter mit 690 mm Durchmesser statt vier bereits sechs schwenkbarer Aufnahmen untergebracht werden, was die Produktionsmöglichkeiten in gleichem Zeitraum deutlich um 50% anhebt.

Das heißt im Rahmen dieser Erfindung, dass zu der Überlappung der Aufnahmen, mit der bereits Raum für die Aufnahmen eingespart wird,
zusätzlich eine weitere Raumeinsparung bzw. Vergrößerung der Anzahl der möglichen Aufnahmen geschaffen wird, wenn die Rotationsachse einer Aufnahme durch den Aufnahmeraum verläuft.

Vorzugsweise ist dabei der Abstand von zwei Rotationsachsen von zwei benachbarten Aufnahmen kürzer als die größte Länge der Längsausrichtung des Aufnahmeraums

Wenn sich ein Drehlager für die Aufnahme unterhalb des Aufnahmeraums befindet, wird damit das Einsetzen einer Wabe in den Aufnahmeraum der Aufnahme nicht durch eine Drehachse behindert.

Es ist bevorzugt, den Abstand von den zwei Rotationsachsen von zwei benachbarten Aufnahmen kürzer vorzusehen als die Länge des Aufnahmeraums.

Dadurch ist die Schwenkbewegung der Aufnahmen bis zum Anschlag an die benachbarte Aufnahme begrenzt und es kommt zu einer kurzen Überlappung, aber auch dadurch kann noch einmal Raum eingespart werden bzw. der Durchmesser des Behälters verkleinert werden. Um im vorangehenden Beispiel zu bleiben, könnten noch einmal zwei weitere Aufnahmen in die gleiche Behältergröße untergebracht werden. Die Überlappung der Aufnahmen ist im Randbereich nicht kritisch, da die Wabe dort ihr Rähmchen hat.

Im Folgenden soll die Erfindung anhand von Ausführungsbeispielen und vier Figuren weiter erläutert werden.

Dabei zeigen
Fig. 1 eine dreidimensionale Ansicht einer Selbstwendeschleuder gemäß der Erfindung,
Fig. 2 eine schematische Draufsicht auf eine Selbstwendeschleuder gemäß der Erfindung
Fig. 3 eine Detaildraufsicht auf eine Tangentialschleuder gemäß der Erfindung und
Fig. 4a und Fig 4b eine Detaildraufsicht auf die Bewegung der Aufnahmen mit verlagerter Rotationsachse.

Die in den Figuren gezeigten Ausführungsbeispiele beziehen sich auf Honigschleudern 1 der Kategorie Selbstwendeschleuder und
Tangentialschleuder.

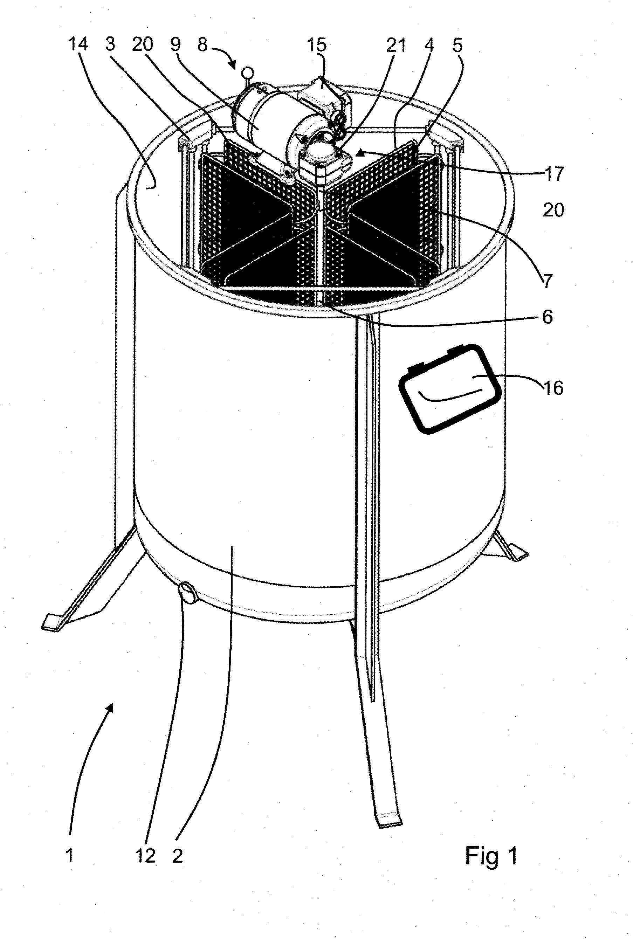

Um einen Überblick zu der erfindungsgemäßen Honigschleuder 1 zu erhalten, ist in Fig. 1 eine Selbstwendeschleuder mit vier Aufnahmen 4 dreidimensional dargestellt. Aus Gründen der Übersichtlichkeit wurde der Deckel des Behälters 2 in der Fig. 1 weggelassen.

Im Inneren des Behälters ist ein drehbarer Korb 3 vorgesehen, der über einen Antrieb 8, der einen Motor 9 umfasst, in Rotation um die Rotationsachse 6 versetzt werden kann. An diesem Korb sind die Aufnahmen 4 vorzugsweise schwenkbar gelagert, so dass sie je nach
Drehrichtung aufgrund der Zentrifugalkräfte eine andere Position einnehmen. Dabei befindet sich die Rotationsachse 10 der Aufnahmen 4 näher an der Behälter-Innenwand 14 als an der Rotationsachse 6 des Korbs 3. Im Stillstand des Korbes 3 werden die Aufnahmen durch eine nicht dargestellte Rückstelleineinrichtung in die radiale Position im Korb 3 gebracht.

Die Aufnahmen 4 besitzen einen Aufnahmeraum 5 für Waben 20, die hier zur Vereinfachung schwarz dargestellt sind. Die Aufnahmen 4 haben in diesem Ausführungsbeispiel eine Gitterstruktur, so dass Honig aus den Wabenaufgrund von Zentrifugalkräften gegen die Behälter-Innenwand 14 herausgeschleudert werden kann, und zwar je nach Drehrichtung entweder von der ersten oder der zweiten Wabenseite.

Der Honig rinnt dann die Behälter-Innenwand 14 hinunter und kann aus der 12 entnommen werden. Verständlicherweise nimmt das Gewicht der Waben dabei ab, was Einfluss auf die die Belastung durch die Zentrifugalkraft auf die Wabe 20 selbst, als auch auf eine mögliche Unwucht des Korbes 3 hat.

Um das Gewicht der Waben während des Schleuderprozesses kontinuierlich zu überwachen, ist mindestens eine Messvorrichtung 17 vorgesehen, die Erkenntnisse über das Gewicht der Waben 20 gibt und diesen Messwert an eine Steuerungseinheit 15 des Antriebs 8 weitergibt, wodurch direkt steuerungstechnisch über den Motor 9 Einfluss auf die Drehzahl des Korbes genommen werden kann, um Schäden zu vermeiden. Man kann dementsprechend eine automatische Regelung der Drehzahl des Korbes einrichten, so dass eine kritische Grenze für die Zentrifugalkraft nicht überschritten wird.

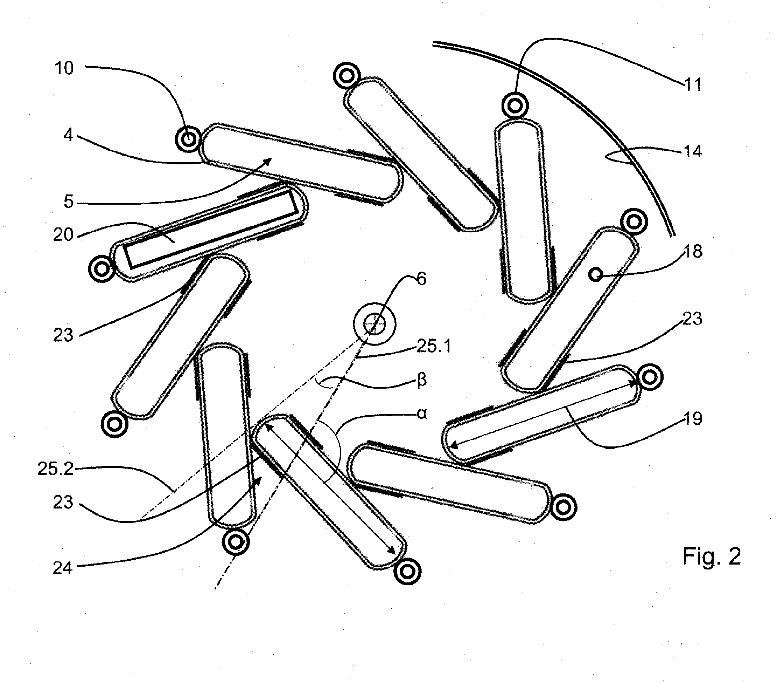

Die Messvorrichtungen 17 können mit unterschiedlichen physikalischen Messverfahren arbeiten. So ist beispielhaft in Fig. 1 ein Sensor 21 zur Ermittlung des Trägheitsmomentes vorgesehen, aus dessen Messwert sich das Gewicht der Wabe rechnerisch ermitteln lässt. Als alternatives oder zusätzliches Verfahren ist beispielhaft ein Kraft- oder Gewichtssensor 18 (Fig. 2) in der Aufnahme 4 angebracht, der zum Beispiel als piezoelektronischer Aufnehmer seine Messdaten auch drahtlos übertragen kann. Oder als drittes aber für die Erfindung nicht abschließendes Beispiel ist ein Winkelmesser vorgesehen, der den Ausschlag der Aufnahme 4 aufgrund der Zentrifugalkraft gegen die Kraft der Rückstelleineinrichtung bestimmt und somit auch das Gewicht anzeigen kann. Der Ausschlagwinkel kann auch über optoelektronische Verfahren ermittelt werden.

In der Steuereinheit 15 ist eine maximale Drehzahl in Abhängigkeit des Wabengewichtes bzw. der Wabengewichtsverteilung hinterlegt. Auf einem Monitor 16 kann der Betreiber der Honigschleuder beispielsweise den genauen Verlauf der Drehzahlveränderung verfolgen.

Fig. 2 zeigt eine schematische Draufsicht auf eine Selbstwendeschleuder mit 10 Aufnahmen in einem aus Gründen der Übersichtlichkeit nicht dargestellten Korb, der um die Rotationsachse 6 dreht, und zwar in rotierendem Zustand. Die Aufnahmen 4 schwenken dabei um eine außerhalb des Aufnahmeraums 5 angeordnete Drehachse 11 bzw. Rotationsachse 10. In diesem Beispiel ist der Schwenkwinkel so groß, dass sich benachbarte Aufnahmen überlappend berühren.

Die größte Lange eines Aufnahmeraums 5 wird hier als Längsausrichtung 19 bezeichnet. Diese Längsausrichtung sollte zu einer von der Rotationsachse (6) radialen, den Aufnahmeraum durchlaufenden Linie (25.1, 25, 2) einen Winkel α zwischen 30° und 150°, vorzugsweise sogar 60° bis 120° aufweisen. Dadurch stehen die Aufnahmen in einer Richtung, in der die Waben 20 noch ohne Bruchgefahr ihren Honig an die nur andeutungsweise dargestellte Behälterinnenwand 14 schleudern können.

An den in Längsausrichtung 19 vorhandenen Enden des Aufnahmeraums 5 befinden sich in der Regel die Rähmchen der Waben 20, so dass dort nicht die Gefahr besteht, dass Honig von dort ausgeschleudert wird und möglicherweise eine weiter außen im Behälter befindliche Aufnahme 4 trifft. Um aber die Gefahr vollständig zu beseitigen ist im Überlappungsbereich 24 zwischen zwei Aufnahmen wenigstens ein Ableitblech 23 vorgesehen, das ausgeschleuderten Honig auffangen und in den unteren Bereich des Behälters ableiten kann. Bei dieser in Fig. 2 dargestellten Selbstwendeschleuder besitzen die Aufnahmen 4 auf beiden Seiten wenigstens ein Ableitblech 23, da die Aufnahmen 4 bei einer Drehrichtungsumkehr mit der anderen Seite zur Behälterinnenwand 14 zeigen.

Der Überlappungsbereich 24 ist dabei der Raum, der durch zwei radiale Linien 25.1 und 25.2, die die in Längsausrichtung eines Aufnahmeraums vorhandenen Enden berühren und den Winkel β bilden, sowie zwei Längsseiten von benachbarten Aufnahmen 4, gebildet ist.

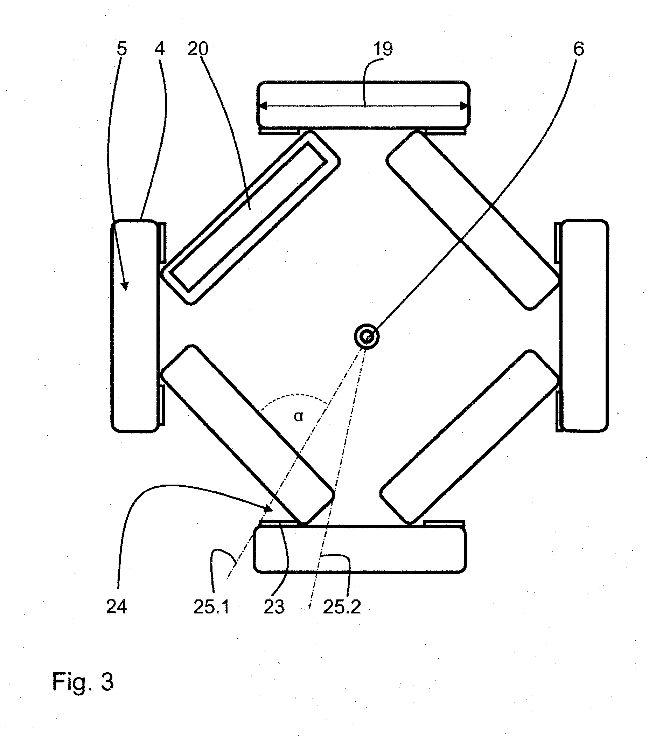

Analog gilt das Gesagte für Fig. 3, wo eine Tangentialschleuder dargestellt ist, bei der die Waben 20 manuell umgedreht werden müssen, wo aber die Aufnahmen ebenfalls einen Überlappungsbereich 24 aufweisen, um mehr Aufnahmen 4 in der gleichen Behältergröße unterbringen zu können. Hier sind feststehende Aufnahmen 4, und zwar jede zweite auf dem Umfang aller Aufnahmen im Korb, etwas weiter innen angeordnet ist als feststehende weiter außen angeordnete Aufnahmen 4.

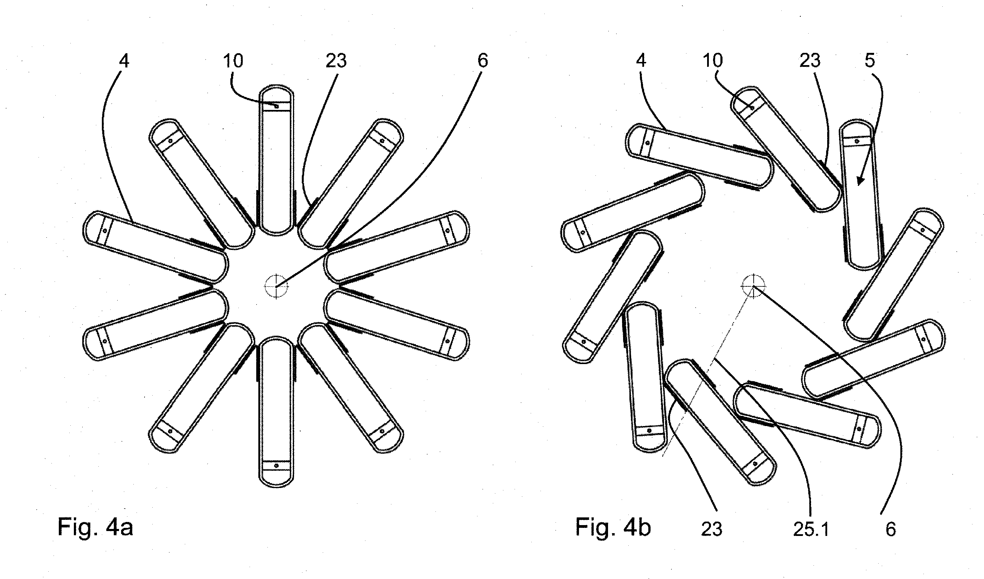

Schließlich zeigen Fig. 4a und Fig. 4b schematisch die gleiche Selbstwendeschleuder mit zehn Aufnahmen 4 in stehendem (Fig. 4a) und in drehendem (Fig. 4b) Zustand. Alle Aufnahmen drehen um die Rotationsachse 6 des Korbes, der hier zur Vereinfachung und zum besseren Verständnis nicht dargestellt ist Die Rotationachsen 10 sind so eng zueinander angeordnet, so dass ihr Abstand geringer ist als die Längsausrichtung 19, also die längste Ausdehnung des Aufnahmeraums 5, was wiederum zur Folge hat, dass die Aufnahme 4 auch bei einem durch die Zentrifugalkraft bedingten vollständigen Schwenk nicht mit beiden Enden den gleichen Abstand zur Behälterinnenwand einnehmen kann, sondern sich benachbarte Aufnahmen ein Stück überlappen. Damit der Honig aus den Waben nicht gegen die der Behälterwand abgewandten Seite der benachbarten Aufnahme geschleudert wird, sind im Überlappungsbereich Ableitbleche 23 angeordnet.

Durch die Darstellung der radialen Hilfsline 25.1, die eine Zentrifugalkraftrichtung ausgehend von der Rotationsachse 6 darstellt, wird deutlich, dass das Ableitblech 23 bezogen auf die Hilfsline genau an oder nahe der Hilfslinie endet, wo die Hilfslinie das Ende der nächsten Aufnahme passiert. Der ausgeschleuderte Honig kann sich also nicht an der nächsten Aufnahme, die näher an der Behälterinnenwand liegt, absetzen. Das wird deshalb möglich, weil das Ableitblech nur den Teil der Aufnahme 4 abdeckt, wo sich im Aufnahmeraum vornehmlich das (Holz-)Rähmchen der Wabe befindet.

Mit dieser Überlappung der Aufnahmen 4, ist in diesem Ausführungsbeispiel zusätzlich die Rotationsachse 10 jeder Aufnahme 4 in den Bereich des Aufnahmeraums verlegt worden, was dazu führt, dass sich der Behälterraum noch einmal verkleinern lässt.

**Bezugszeichenliste**

| | |
|---|---|
| 1 | Honigschleuder |
| 2 | Behälter |
| 3 | Korb |
| 4 | Aufnahme |
| 5 | Aufnahmeraum |
| 6 | Rotationsachse Korb |
| 7 | Drehachse Korb |
| 8 | Antrieb |
| 9 | Motor |
| 10 | Rotationsachse Aufnahme |
| 11 | Drehachse Aufnahme |
| 12 | Auslassöffnung |
| 13 | Drehlager |
| 14 | Behälter-Innenwand |
| 15 | Steuerungseinheit |
| 16 | Monitor |
| 17 | Messvorrichtung |
| 18 | Gewichtssensor, Kraftsensor |
| 19 | Längsausrichtung der Aufnahme |
| 20 | Wabe |
| 21 | Sensor zur Ermittlung des Trägheitsmomentes |
| 23 | Ableitblech |
| 24 | Überlappungsbereich |
| 25.1, 25.2 | Hilfslinie |
| α | Winkel zw. radialer Line 25.1 und Längsausrichtung 19 |
| β | Winkel zwischen zwei radialen Linien 25.1 und 25.2 |

## Patentansprüche

1. Honigschleuder mit einem Behälter (2), in dem ein drehbarer Korb (3) mit Aufnahmen (4) für Honigwaben und einer Rotationsachse (6) in Drehung versetzbar ist, wobei jede Aufnahme (4) einen Aufnahmeraum (5) aufweist, dessen Längsausrichtung (19) zumindest während des Schleudervorgangs unter einem Winkel zwischen 30° und 150° zu einer von der Rotationsachse (6) radialen, den Aufnahmeraum durchlaufenden Linie (25.1) angeordnet ist,
wobei die Honigschleuder einen Antrieb (8) für die Rotation des Korbes (3) aufweist, und
wobei sich die Aufnahmeräume (5) benachbarter Aufnahmen (4) zumindest während des Schleudervorgangs im Umfangsrichtung des Korbes (3) teilweise überlappen
wobei ein Ableitblech (23) zumindest in einem Überlappungsbereich (24) von zwei benachbarten Aufnahmen (4) vorgesehen ist, **dadurch gekennzeichnet dass** das Ableitblech (23) an einer Aufnahme (4) selbst befestigt ist.

2. Honigschleuder gemäß Anspruch 1, **dadurch gekennzeichnet, dass** die Längsausrichtung (19) eines Aufnahmeraums zumindest während des Schleudervorgangs unter einem Winkel α zwischen 60° und 120° zu einer von der Rotationsachse (6) radialen, den Aufnahmeraum durchlaufenden Linie (25.1) angeordnet ist.

3. Honigschleuder gemäß Anspruch 1 oder 2, **dadurch gekennzeichnet, dass** die Aufnahmen (4) bezogen auf jeweils eine Rotationsachse (10) drehgelagert sind.

4. Honigschleuder gemäß Anspruch 3, **dadurch gekennzeichnet, dass** die Aufnahmen (4) in Abhängigkeit der Drehrichtung des Korbes (3) in zwei Richtungen schwenkbar sind.

5. Honigschleuder gemäß einem der Ansprüche 3 bis 4, **dadurch gekennzeichnet, dass** der Abstand von zwei Rotationsachsen (10) von zwei benachbarten Aufnahmen (4) kürzer als die größte Länge der Längsausrichtung (19) des Aufnahmeraums (5) ist.

6. Honigschleuder gemäß einem der Ansprüche 1 bis 5, **dadurch gekennzeichnet, dass** sich ein Drehlager für die Aufnahme (4) unterhalb des Aufnahmeraums (5) befindet.

## Claims

1. Honey extractor comprising a container (2) in which a rotatable basket (3) having compartments (4) for honeycombs and an axis of rotation (6) can be set in rotation, wherein each compartment (4) comprises a reception space (5), the longitudinal alignment (19) of which is arranged at least during the extraction process at an angle of between 30° and 150° with respect to a radial line (25.1) of the axis of rotation (6) passing through the reception space, wherein the honey extractor comprises a drive (8) for the rotation of the basket (3), and wherein the reception spaces (5) of neighbouring compartments (4) partially overlap at least during the extraction process in the circumferential direction of the basket (3), a deflector plate (23) being provided at least in an overlap region (24) of two neighbouring compartments (4), **characterised in that** the deflector plate (23) is fastened to a compartment (4) itself.

2. Honey extractor according to Claim 1, **characterised in that** the longitudinal alignment (19) of a reception space is arranged at least during the extraction process at an angle α of between 60° and 120° with respect to a radial line (25.1) of the axis of rotation (6) passing through the reception space.

3. Honey extractor according to Claim 1 or 2, **characterised in that** the compartments (4) are each mounted rotatably with respect to an axis of rotation (10).

4. Honey extractor according to Claim 3, **characterised in that** the compartments (4) can be pivoted in two directions depending on the direction of rotation of the basket (3).

5. Honey extractor according to any one of Claims 3 to 4, **characterised in that** the distance between two axes of rotation (10) of two neighbouring compartments (4) is less than the greatest length of the longitudinal alignment (19) of the reception space (5).

6. Honey extractor according to any one of Claims 1 to 5, **characterised in that** a pivot bearing for the compartment (4) is located below the reception space (5).

## Revendications

1. Extracteur à miel comportant un récipient (2) dans lequel un panier rotatif (3) doté de logements (4) pour les nids d'abeilles et d'un axe de rotation (6) peut être mis en rotation, chaque logement (4) présentant un espace de logement (5) dont l'orientation longitudinale (19) forme, au moins pendant le processus d'extraction, un angle compris entre 30° et 150° par rapport à une ligne (25.1) traversant l'espace de logement et étant radiale par rapport à l'axe de rotation (6), l'extracteur à miel comportant un entraînement (8) pour la rotation du panier (3) et les espaces de logement (5) des logements (4) adjacents se chevauchant partiellement, au moins pendant le processus d'extraction, dans le sens périphérique du panier (3), une tôle déflectrice (23) étant prévue au moins dans une zone de chevauchement (24) de deux logements (4) adjacents, **caractérisé en ce que** la tôle déflectrice (23) est elle-même fixée à un logement (4).

2. Extracteur à miel selon la revendication 1, **caractérisé en ce que** l'orientation longitudinale (19) d'un espace de logement est positionnée, au moins pendant le processus d'extraction, selon un angle α compris entre 60° et 120° par rapport à une ligne (25.1) traversant l'espace de réception et étant radiale par rapport à l'axe de rotation (6).

3. Extracteur à miel selon la revendication 1 ou 2, **caractérisé en ce que** les logements (4) sont montés en rotation par rapport à un axe de rotation (10).

4. Extracteur à miel selon la revendication 3, **caractérisé en ce que** les logements (4) peuvent pivoter dans deux directions en fonction du sens de rotation du panier (3).

5. Extracteur à miel selon l'une quelconque des revendications 3 à 4, **caractérisé en ce que** la distance entre deux axes de rotation (10) de deux logements (4) adjacents est plus courte que la longueur maximale de l'orientation longitudinale (19) de l'espace de logement (5).

6. Extracteur à miel selon l'une quelconque des revendications 1 à 5, **caractérisé en ce qu'**un palier pivotant pour le logement (4) se trouve en dessous de l'espace de logement (5).
